(19) Europäisches Patentamt
European Patent Office
Office européen des brevets

(11) Veröffentlichungsnummer: **0 042 508**
**A1**

(12) # EUROPÄISCHE PATENTANMELDUNG

(21) Anmeldenummer: **81104212.6**

(22) Anmeldetag: **02.06.81**

(51) Int. Cl.³: **C 07 F 9/18**
A 01 N 57/14

(30) Priorität: **20.06.80 DE 3023049**

(43) Veröffentlichungstag der Anmeldung:
**30.12.81 Patentblatt 81/52**

(84) Benannte Vertragsstaaten:
**BE CH DE FR GB IT LI NL**

(71) Anmelder: **BASF Aktiengesellschaft**
**Carl-Bosch-Strasse 38**
**D-6700 Ludwigshafen(DE)**

(72) Erfinder: **Theobald, Hans, Dr.**
**Parkstrasse 2**
**D-6703 Limburgerhof(DE)**

(72) Erfinder: **Adolphi, Heinrich, Dr.**
**Kalmitweg 11**
**D-6703 Limburgerhof(DE)**

(72) Erfinder: **Baur, Karl Gerhard, Dr.**
**Van-Leyden-Strasse 17**
**D-6700 Ludwigshafen(DE)**

(54) **Benzylbisthiolphosphate, Verfahren zu ihrer Herstellung und ihre Verwendung zur Bekämpfung von Schädlingen.**

(57) Benzylbisthiolphosphate der Formel

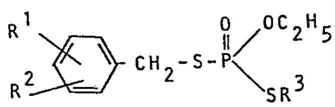

in der
$R^1$ einen verzweigten oder unverzweigten Alkylrest mit bis zu 3 Kohlenstoffatomen
$R^2$ ein Halogenatom und
$R^3$ einen Butylrest
bedeuten, ein Verfahren zu ihrer Herstellung und ihre Verwendung zur Bekämpfung von Schädlingen.

EP 0 042 508 A1

Croydon Printing Company Ltd.

Benzylbisthiolphosphate, Verfahren zu ihrer Herstellung und ihre Verwendung zur Bekämpfung von Schädlingen

Gegenstand der Erfindung sind neue Benzylbisthiolphosphate, ein Verfahren zu ihrer Herstellung, Schädlingsbekämpfungsmittel, die diese Bisthiolphosphate als Wirkstoffe enthalten, sowie ein Verfahren zur Bekämpfung von Schädlingen mit diesen Wirkstoffen.

Benzylbisthiolphosphate, die zur Bekämpfung von Schädlingen geeignet sind, sind beispielsweise aus der DE-OS 21 11 589 bekannt.

Es wurde nun gefunden, daß Benzylbisthiolphosphate der Formel

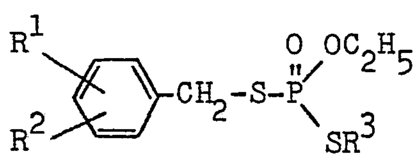

(I),

in der
$R^1$ einen niederen verzweigten oder unverzweigten Alkylrest mit bis zu 3 Kohlenstoffatomen
$R^2$ ein Halogenatom und
$R^3$ einen Butylrest
bedeuten, Schädlinge aus der Klasse der Insekten, Akariden und Nematoden wirksamer bekämpfen als die bekannten Bisthiolphosphate.

Als Alkylreste für $R^1$ seien Ethyl, n-Propyl, Isopropyl und vorzugsweise Methyl genannt. $R^2$ kann Fluor, Brom, Iod und vorzugsweise Chlor sein. $R^1$ steht vorzugsweise in der 2-Stellung und $R^2$ vorzugsweise in der 4-Stellung des Phenylrings. $R^3$ kann n-Butyl, sek.-Butyl, tert.-Butyl oder Isobutyl sein.

WK/sk

Die neuen Verbindungen werden hergestellt, indem man Verbindungen der Formel

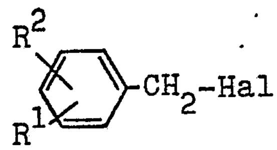 (II),

in der $R^1$ und $R^2$ die obengenannten Bedeutungen haben und Hal für ein Halogenatom steht, mit Salzen von Dithiophosphorsäurederivaten der Formel

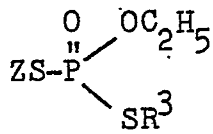 (III),,

in der $R^3$ die obengenannte Bedeutung hat und Z ein Alkalimetallion, ein Äquivalent Erdalkalimetallion oder ein gegebenenfalls durch Alkylreste substituiertes Ammoniumion bedeuten, umsetzt.

Als Halogenatome in der Formel II kommen insbesondere Chlor oder Brom in Betracht. In der Formel III stellt Z vorzugsweise ein Natrium- oder Kaliumion oder ein Ammonium- bzw. methylsubstituiertes Ammoniumion dar. Insbesondere eignet sich das Dimethylammoniumion zur Umsetzung.

Die Umsetzung wird zweckmäßigerweise in gegenüber den Reaktionsteilnehmern inerten Lösungs- und Verdünnungsmitteln durchgeführt. Hierfür sind beispielsweise geeignet: Wasser; Alkohole, wie Methanol, Ethanol, Propanol; Ether, wie Tetrahydrofuran, Dioxan, Diglykoldimethylether; Ketone, wie Aceton, Methylethylketon, Diethylketon; aromatische Kohlenwasserstoffe, wie Toluol, Xylol, Chlorbenzol; Nitrile, wie Acetonitril; Dimethylformamid; Dimethylsulfoxid. Auch Gemische dieser Lösungs- und Verdünnungsmittel können verwendet werden. Bei Verwendung von nichtwäßrigen Lösungsmitteln kann die Zugabe einer katalytischen Menge Kaliumiodid zur Erhöhung der Reaktivität zweckmäßig sein.

Zur Durchführung des Verfahrens setzt man die Ausgangsstoffe in äquimolarem Verhältnis ein. Ein Überschuß der einen oder anderen Reaktionskomponente kann in einigen Fällen Vorteile bringen.

Die Reaktionstemperatur kann innerhalb eines größeren Bereichs variiert werden. Im allgemeinen arbeitet man bei Temperaturen im Bereich von 0 bis 150, vorzugsweise im Bereich von 20 bis 100°C.

Das folgende Beispiel soll die Herstellung der neuen Bisthiolphosphate erläutern:

Beispiel 1

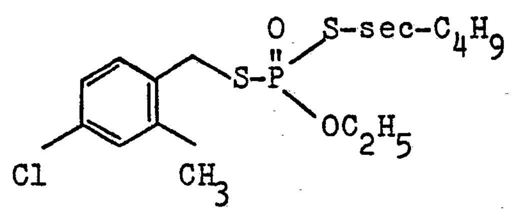

495 Gew.-Teile Dimethylammonium-(O-ethyl-S-sec.-butyl-dithiophosphat) werden mit 289 Gew.-Teilen 2-Methyl-4-chlorbenzylchlorid in 2000 Vol.-Teilen Wasser und 40 Vol.-Teilen Dimethylformamid 9 Stunden bei 70°C gerührt. Nach dem Abkühlen wird die organische Phase abgetrennt, mit Wasser gewaschen, über $Na_2SO_4$ getrocknet, filtriert, eingeengt und bei 0,7 mbar bei 50°C andestilliert. Es werden 568 Gew.-Teile (98 % Ausbeute) O-Ethyl-S-sec.-butyl-S-2-methyl-4-chlorbenzylphosphordithioat erhalten:

$C_{14}H_{22}PO_2S_2Cl$ (352,5)

| | | | | | |
|---|---|---|---|---|---|
| Ber.: | C 47,7 | H 6,3 | S 18,2 | Cl 10,1 | P 8,8 |
| Gef.: | C 47,8 | H 6,5 | S 18,2 | Cl 10,4 | P 8,4. |

100 MHz-NMR-Spektrum in $CDCl_3$ (δ-Werte)
1,05 (3H); 1,2-1,5 (3H+3H); 1,7 (2H); 2,32 (3H); 3,48 (1H); 4,0-4,3 (2H+2H); 7,0-7,3 (3H).

Analog lassen sich herstellen:

| Beispiel Nr. | $R^1$ | $R^2$ | $R^3$ | MHz-NMR-Spektrum in LM (δ-Werte) |
|---|---|---|---|---|
| 2 | 2-$CH_3$ | 4-Cl | n-$C_4H_9$ | |
| 3 | 2-$CH_3$ | 4-Cl | iso-$C_4H_9$ | 1,01 (5H); 1,3 (3H); 1,9 (1H); 2,38 (3H); 3,75 (2H); 3,95-4,2 (2H+2H); 7,0-7,3 (3H) |
| 4 | 2-$CH_3$ | 4-Cl | tert.-$C_4H_9$ | |
| 5 | 4-$CH_3$ | 2-Cl | n-$C_4H_9$ | |
| 6 | 4-$CH_3$ | 2-Cl | iso-$C_4H_9$ | |
| 7 | 4-$CH_3$ | 2-Cl | sek.-$C_4H_9$ | |
| 8 | 4-$CH_3$ | 2-Cl | tert.-$C_4H_9$ | |
| 9 | 4-$CH_3$ | 3-Cl | n-$C_4H_9$ | |
| 10 | 4-$CH_3$ | 3-Cl | iso-$C_4H_9$ | |
| 11 | 4-$CH_3$ | 3-Cl | sek.-$C_4H_9$ | |
| 12 | 4-$CH_3$ | 3-Cl | tert.-$C_4H_9$ | |
| 13 | 2-$CH_3$ | 4-Br | n-$C_4H_9$ | |
| 14 | 2-$CH_3$ | 4-Br | sek.-$C_4H_9$ | |
| 15 | 2-$CH_3$ | 4-Br | iso-$C_4H_9$ | |
| 16 | 2-$CH_3$ | 4-Br | tert.-$C_4H_9$ | |

Die erfindungsgemäßen Verbindungen sind geeignet, schädliche oder lästige Gliedertiere aus der Klasse der Insekten und der Arachnoidea (Spinnentiere, Milben, Zecken) wirksam zu bekämpfen.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cerealella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria Mellonella (Wachsmotte), Malacosoma neustria (Ringelspinner), Dendrolimus pini (Kiefernspinner), Thaumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarus (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling);

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkäfer), Agricotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varicestris (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Buchdrucker), Blastophagus piniperda (Gefurchter Waldgärtner);

aus der Ordnung der Zweiflügler (Diptera) beispielsweise Mayetiola destructor (Hessenfliege), Dasyneura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake),

Dacus cucurbitae (Melonenfliege), Dacus oleae (Olivenfliege), Ceratitis capitata (Mittelmeer-Fruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege);

aus der Ordnung der Hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), atta sexdens (Blattschneiderameise);

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze);

aus der Ordnung der Pflanzensauger (Homoptera) beispielsweise Perkinsiella saccharicida (Zuckerrohrzikade), Nilaparvata lugens (Braune Zikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfellaus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfalterlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwar-

ze Sauerkirschenlaus), Dysaulacorthum pseudosolani (Gefleckte Kartoffellaus), Acyrthosiphon onobrychis (Grüne Erbsenlaus), Macrosiphon rasae (Große Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus);

aus der Ordnung der Termiten (Isoptera) beispielsweise Reticulitermes lucifugus.

Zur Klasse der Arachnoidea gehören Spinnentiere, Milben und Zecken (Acarina) beispielsweise Ixodes ricinus (Holzblock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Die erfindungsgemäßen Verbindungen können mit Erfolg im Pflanzenschutz sowie auf dem Hygiene-, Vorratsschutz- und Veterinärsektor als Schädlingsbekämpfungsmittel eingesetzt werden.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z.B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfo-- nate, Alkylsulfate, Alkylsulfonate, Alkali- und Erdalkali-salze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadeca-nole, Salze von sulfatiertem Fettalkoholglykoläther, Kondensationsprodukte von sulfoniertem Naphthalin und Naphtha--linderivaten mit Formaldehyd, Kondensationsprodukte des

Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpoly--glykolether, Tributylphenylpolyglykolether, Alkylarylpolyetheralkohole, Isotridecylalkohol, Fettalkoholethylenoxid--Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden. Im allgemeinen liegen sie zwischen 0,0001 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit über 95 Gew.% Wirkstoff oder sogar den 100 %igen Wirkstoff allein auszubringen.

Die Aufwandmenge an Wirkstoff beträgt unter Freilandbedingungen 0,2 bis 10, vorzugsweise 0,5 bis 2,0 kg/ha.

Beispiele für Formulierungen sind:

I. 500 g Wirkstoff gemäß Beispiel 1
50 g Calciumdodecylbenzolsulfonat
50 g oxethyliertes Ölsäuremonoethanolamid
ad 1000 ml Xylol

II. 400 g Wirkstoff Nr. 3
60 g Calciumdodecylbenzolsulfonat
40 g oxethyliertes Ölsäuremonoethanolamid
100 g N-Methylpyrrolidon
ad 1000 ml Xylol

III. 3 Gew.-Teile Wirkstoff Nr. 1 werden mit 97 Gew.-Teilen feinteiligem Kaolin innig vermischt. Man erhält auf diese Weise ein Stäubemittel, das 3 Gew.-% des Wirkstoffs enthält.

IV. 30 Gew.-Teile Wirkstoff Nr. 1 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Zu den Wirkstoffen können Öle verschiedenen Typs, Herbizide, Fungizide, andere Insektizide, Bakterizide, gegebenen-

falls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden: 1,2-Dibrom-3-chlorpropan, 1,3-Dichlorpropen, 1,3-Dichlorpropen + 1,2-Dichlorpropan, 1,2-Dibrom-ethan, 2-sec.-Butyl-phenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthal-N-methylcarbamat, 2,3-Dihydro-2,2-dimethyl-benzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyd-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-4-chlor-phenyl)-N',N'-dimethylformamidin, Tetrachlorthiophen, O,O-Dimethyl-O-(p-nitrophenyl)-phosphorthioat, O,O-Diethyl-O-(p-nitrophenyl)-phosphorthioat, O-Ethyl-O-(p-nitrophenyl)-phenyl-phosphonothioat, O,O-Dimethyl-O-(3-methyl-4-nitrophenyl)-phosphorthioat, O,O-Diethyl-O-(2,4-dichlorphenyl)-phosphorthioat, O-Ethyl-O-(2,4-dichlorphenyl)-phenyl-phosphonothioat, O,O-Dimethyl-O-(2,4,5-trichlorphenyl)--phosphorthioat, O-Ethyl-O-(2,4,5-trichlorphenyl)-äthyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropyl-phosphoramidat, O,O-Diethyl-O-[p-(methylsulfinyl)phenyl]-phosphorthioat, O-Ethyl-S-phenyl-äthyl-phosphonodithioat, O,O-Diethyl-[2-chlor-1-

-(2,4-dichlorphenyl)-vinyl]-phosphat, 0,0-Dimethyl-[-2--chlor-1-(2,4,5-trichlorphenyl)]-vinyl-phosphat, 0,0-Dimethyl-S-(1'-phenyl)-ethylacetat-phosphordithioat, Bis--(dimethylamino)-fluorphosphinoxid, Octamethyl-pyrophosphoramid, 0,0,0,0-Tetraethyldithio-pyrophosphat, S-Chlormethyl-0,0-diethyl-phosphordithioat, 0-Ethyl-S,S-dipropyl--phosphordithioat, 0,0-Dimethyl-0-2,2-dichlorvinyl-phosphat, 0,0-Dimethyl-1,2-dibrom-2,2-dichlorethylphosphat, 0,0-Dimethyl-2,2,2-trichlor-1-hydroxy-ethylphosphonat, 0,0--Dimethyl-S-[1,2-biscarbethoxy-ethyl-(1)]-phosphordithioat, 0,0-Dimethyl-0-(1-methyl-2-carbmethoxy-vinyl)-phosphat, 0,0-Dimethyl-S-(N-methyl-carbamoyl-methyl)-phosphordithioat, 0,0-Dimethyl-S-(N-methyl-carbamoyl-methyl)-phosphorthioat, 0,0-Dimethyl-S-(N-methoxyethyl-carbamoyl-methyl)-phosphordithioat, 0,0-Dimethyl-S-(N-formyl-N-methyl-carbamoylmethyl--phosphordithioat, 0,0-Dimethyl-0-[1-methyl-2-(methyl-carbamoyl)-vinyl]-phosphat, 0,0-Dimethyl-0-[(1-methyl-2-dimethylcarbamoyl)-vinyl]-phosphat, 0,0-Dimethyl-0-[(1-methyl--2-chlor-2-diethylcarbamoyl)-vinyl]-phosphat, 0,0-Diethyl--S-(ethylthio-methyl)-phosphordithioat, 0,0-Diethyl-S-[(p--chlorphenylthio)-methyl]-phosphordithioat, 0,0-Dimethyl--S-(2-ethylthioethyl)-phosphorthioat, 0,0-Dimethyl-S-(2--ethylthioethyl)-phosphordithioat, 0,0-Dimethyl-S-(2-ethylsulfinyl-ethyl)-phosphorthioat, 0,0-Diethyl-S-(2-ethylthio---ethyl)-phosphordithioat, 0,0-Diethyl-S-(2-ethylsulfinyl--ethyl)-phosphorthioat, 0,0-Diethyl-thiophosphoryliminophe--nyl-acetonitril, 0,0-Diethyl-S-(2-chlor-1-phthalimidoethyl)--phosphordithioat, 0,0-Diethyl-S-[6-chlor-benzoxazolon-(2)--yl(3)]-methyldithiophosphat, 0,0-Dimethyl-S-[2-methoxy--1,3,4-thiadiazol-5-[4H]-onyl-(4)-methyl]-phosphordithioat, 0,0-Diethyl-0-[3,5,6-trichlor-pyridyl-(2)]-phosphorthioat, 0,0-Diethyl-0-(2-pyrazinyl)-phosphorthioat, 0,0-Diethyl-0--[2-isopropyl-4-methyl-pyrimidinyl(6)]-phosphorthioat, 0,0-Diethyl-0-[2-(diäthylamino)-6-methyl-4-pyrimidinyl]--3-yl-methyl)-phosphordithioat, 0,0-Dimethyl-S-[(4,6-di-

amino-1,3,5-triazin-2-yl)-methyl]-phosphordithioat, O,O-Diethyl-(1-phenyl-1,2,4-triazol-3-yl)-thionophosphat, O,S-Dimethyl-phosphor-amido-thioat, O,S-Dimethyl-N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid.

Die folgenden Beispiele belegen die biologische Wirkung.

Beispäel A
Dauerkontakt mit Stubenfliegen (Musca domestica)

Petrischalen mät 10 cm Durchmesser werden innen mit der azetonisdhen Lösung der Wirkstoffe behandelt. Nach dem Verdunsten des Lösungsmittels besetzt man die Schalen mit 20 4 Tage alten Stubenfliegen. Die Mortalitätsrate wird nach 4 Stunden ermittelt.

Beispiel B
Kontaktwirkung auf Moskito-Larven (Aedes aegypti)

200 ml Leitungswasser werden mit der Wirkstoffaufbereitung versetzt und darauf mit 30 bis 40 Moskito-Larven im 4. Larvenstadium besetzt. Die Versuchstemperatur beträgt 20°C. Nach 24 Stunden wird die Wirkung ermittelt.

Beispiel C
Kontaktwirkung auf Kornkäfer (Sitophilus granaria)

Petrischalen von 10 cm Durchmesser werden mit der acetonischen Wirkstofflösung ausgekleidet. Nach Verdunsten des Lösungsmittels belegt man die Schalen mit 100 Kornkäfern. Nach 4 Stunden werden die Käfer in unbehandelte Gefäße überführt. Die Mortalitätsrate wird nach 24 Stunden ermittelt. Dabei wird festgestellt, wieviele Käfer in der Lage sind, nach diesem Zeitpunkt innerhalb von 60 Minuten ein unbehandeltes Pappschälchen (ø 40 mm, Höhe 10 mm) zu verlassen.

Beispiel D

Kontaktwirkung auf Blattläuse (Aphis fabae); Spritzversuch

Getopfte Bohnenpflanzen (Vicia faba) mit starken Blattlauskolonien werden in der Spritzkammer mit den wäßrigen Wirkstoffaufbereitungen tropfnaß gespritzt. Die Auswertung erfolgt nach 24 Stunden.

Beispiel E

Wirkung auf Larven der Mehlmotte (Ephestia kuehniella); Zuchtversuch

Weizenmehl, welches stark mit Eiern der Mehlmotte belegt ist, wird mit den Wirkstoffen innig vermischt. 10 g werden in Kunststoffbechern (250 ml) abgefüllt und bei 22°C gelagert. Nach 4 Wochen beurteilt man däe Entwicklung der Larven.

Beispiel F

Wirkung auf Spinnmilben (Tetranychus telarius)

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen kommen dazu auf einen Drehteller und werden von allen Seiten mit 50 ml Spritzbrühe besprüht. Der Sprühvorgang dauert ca. 22 Sekunden. Nach 8 Tagen werden die Pflanzen auf lebende Spinnmilben untersucht.

In den Beispielen A bis F zeigen insbesondere die Substanzen der Beispiele 1 und 3 eine bessere Wirkung als die Vergleichssubstanz O-Ethyl-S-n-propyl-S-2-methyl-4-chlorbenzylphosphordithioat.

## Patentansprüche

1. Benzylbisthiolphosphate der Formel

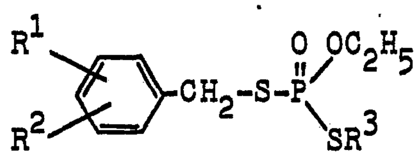 (I),

in der

$R^1$ einen verzweigten oder unverzweigten Alkylrest mit bis zu 3 Kohlenstoffatomen

$R^2$ ein Halogenatom und

$R^3$ einen Butylrest

bedeuten.

2. Schädlingsbekämpfungsmittel, enthaltend eine Verbindung der Formel I gemäß Anspruch 1.

3. Schädlingsbekämpfungsmittel, enthaltend einen festen oder flüssigen Trägerstoff und mindestens eine Verbindung der Formel I gemäß Anspruch 1.

4. Verfahren zur Bekämpfung von Schädlingen, dadurch gekennzeichnet, daß man Verbindungen der Formel I gemäß Anspruch 1 auf die genannten Schädlinge bzw. deren Lebensraum einwirken läßt.

5. Verfahren zur Herstellung der Verbindungen der Formel I gemäß Anspruch 1, dadurch gekennzeichnet, daß man Verbindungen der Formel

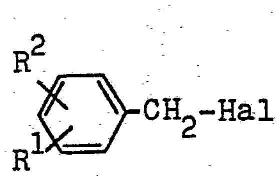

(II),

in der $R^1$ und $R^2$ die im Anspruch 1 genannten Bedeutungen haben und Hal für ein Halogenatom steht, mit Salzen von Dithiophosphorsäurederivaten der Formel

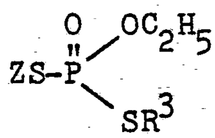

(III),

in der $R^3$ die im Anspruch 1 genannte Bedeutung hat und Z ein Alkalimetallion, ein Äquivalent Erdalkalimetallion oder ein gegebenenfalls durch Alkylreste substituiertes Ammoniumion bedeuten, umsetzt.

6. Verfahren zur Herstellung von Schädlingsbekämpfungsmitteln, <u>dadurch gekennzeichnet</u>, daß man Verbindungen der Formel I gemäß Anspruch 1 mit Streckmitteln und/ oder oberflächenaktiven Mitteln mischt.

0042508

Nummer der Anmeldung

Europäisches Patentamt

# EUROPÄISCHER RECHERCHENBERICHT

EP 81 10 4212

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 3 725 546 (H. TSUCHIYA)<br>* ganzes Dokument, insbesondere Spalte 2, Verbindung 3; Spalte 3, Verbindungen 12, 14; Spalte 5, Verbindungen 44,46,47,48; Spalte 6, Verbindungen 68,69,70; Spalte 7, Verbindungen 71,72,73,75 *<br>-- | 1-6 | C 07 F 9/18<br>A 01 N 57/14 |
| D | DE - A - 2 111 589 (BAYER)<br>* Patentansprüche *<br>----- | 1-6 | |

RECHERCHIERTE SACHGEBIETE (Int. Cl.³)

C 07 F 9/18
A 01 N 57/14

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 04.09.1981 | BESLIER |